# EUROPEAN PATENT APPLICATION

(11) **EP 1 298 397 A2**
(43) Date of publication of application: **02.04.2003**
(21) Application number: 02019395.9
(22) Date of filing: 30.08.2002
(51) Int. Cl.: F24H 1/14, F24D 19/10

(54) **Heating faucet**

(30) Priority: 28.09.2001 JP 2001301823
(71) Applicant: JAMCO CORPORATION, Mitaka, Tokyo (JP)
(72) Inventor: Kikuchi, Hiroaki, Tokyo (JP); Itakura, Ryoichi, Tokyo (JP)
(74) Representative: TER MEER STEINMEISTER & PARTNER GbR

(57) **Abstract**

A heating faucet 1 according to the present invention comprises a water supply line 3 connected to a faucet 2 to supply water, and a heating unit 4 mounted in midstream of the water supply line 3 to heat water. The heating unit 4 heats water traveling through the water supply line 3. The heating unit 4 requires only small space when installed, thus enabling effective use of the limited lavatory space within the aircraft. The cost of the heating faucet 1 as a whole is cut down, and the heating unit 4 can be easily mounted to the water supply line 3.

## Description

### FIELD OF THE INVENTION

The present invention relates to a heating faucet utilized in a lavatory unit mounted onboard an aircraft.

### DESCRIPTION OF THE RELATED ART

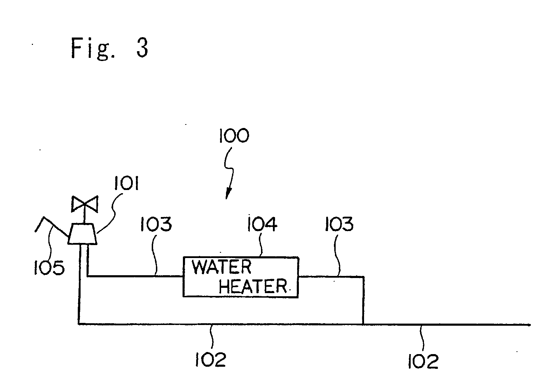

Conventionally, as shown in FIG. 3, a prior-art heating faucet 100 utilized in a lavatory unit onboard an aircraft comprises a water supply line 102 connected to a faucet 101, and a hot water supply line 103 diverged from the water supply line 102 and connected to the faucet 101, with a water heater 104 equipped in midstream of the hot water supply line 103 to heat water.

However, according to the prior-art heating faucet 100, the hot water supply line 103 must be provided independently from the water supply line 102, and large space is used up for disposing the hot water supply line 103 and the water heater 104. The very limited space within the lavatory unit of an aircraft is not used efficiently according to the conventional faucet, and the cost of the whole heating faucet 100 is high. Further, since according to the conventional faucet, the water temperature discharged through a discharge opening 105 formed to the faucet 101 is controlled by mixing hot water and cold water, so it is very difficult to control water temperature accurately.

### SUMMARY OF THE INVENTION

The object of the present invention is to provide a heating faucet that overcomes the problems of the prior art. The heating faucet according to the present invention comprises a heating unit that heats the water traveling through the water supply line, requiring no independent hot water supply line in addition to the water supply line as in the prior art heating faucet. According to the present invention, there is no large space required to install the heating unit, so the limited space within the lavatory unit is used very efficiently. Since there is no independent hot water supply line required, the whole cost of the heating faucet is cut down according to the present invention, and the overall structure of the system is simplified. According to the present heating faucet, the heating unit can be mounted to the water supply line by a very easy operation.

The heating faucet according to the present invention comprises connecting a water supply line for supplying water to a faucet, and mounting a heating unit for heating water along the water supply line.

Further, the heating unit mentioned above is equipped with a magnet coil wound around the outer periphery of a water supply piping of the water supply line, a heating element formed inside the water piping of the water supply line at a location corresponding to the location of the magnet coil, a controller equipped to the faucet portion of the heating faucet for controlling the water temperature, and a power supply for supplying power to the magnet coil.

Moreover, the above-mentioned controller can be a variable resistor for varying the current flowing to the magnet coil.

### BRIEF DESCRIPTION OF THE DRAWINGS

FIG. 1 is a schematic view showing the heating faucet according to the preferred embodiment of the present invention;
FIG. 2 is a schematic view showing the heating unit in the heating faucet according to the present invention; and
FIG. 3 is a schematic view showing the heating faucet of the prior art.

### DETAILED DESCRIPTION OF THE PREFERRED EMBODIMENT

A preferred embodiment of the present invention will now be explained in detail with reference to the accompanied drawings.

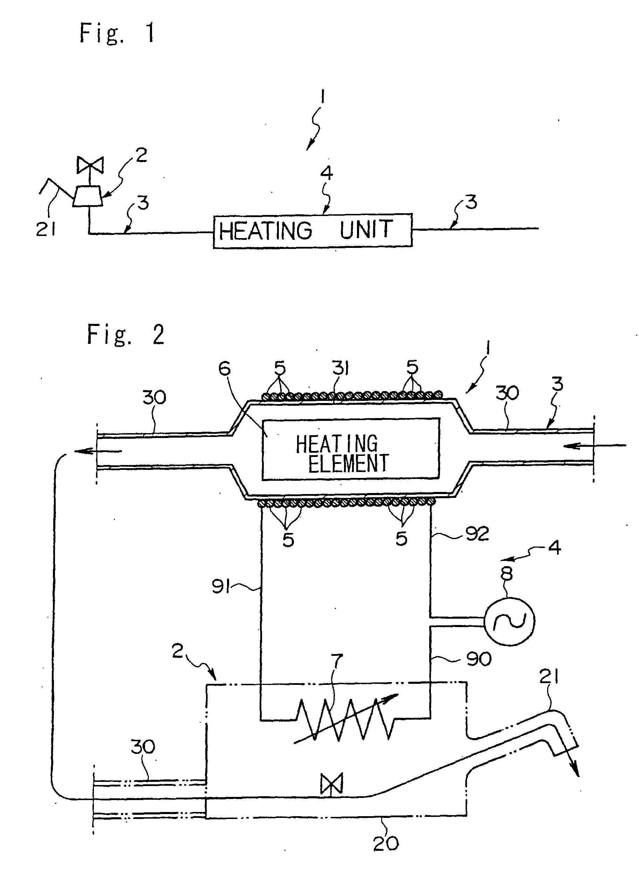

FIG. 1 is a schematic view showing the heating faucet according to the preferred embodiment of the present invention, and FIG. 2 is a schematic view showing the heating unit of the heating faucet according to the present invention.

As shown in FIG. 1, the heating faucet 1 according to the present invention comprises a water supply line 3 connected to a faucet 2 for supplying water thereto, and a heating unit 4 mounted in midstream of the water supply line 3 for heating water.

As shown in FIG. 2, the heating unit 4 comprises a magnet coil 5 wound around the outer periphery of a water supply piping 30 of the water supply line 3, a heating element 6 located within the water supply piping 30 of the water supply line 3 at a location corresponding to the magnet coil 5, a variable resistor 7 equipped to the faucet portion 20 of the faucet 2 which functions as a controller for controlling the water temperature, and a power supply 8 for supplying power to the magnet coil 5.

As shown in FIG. 2, to a portion of the water supply piping 30 of the water supply line 3 is formed a large-diameter cylinder portion 31 which is coaxial to the piping 30, and to the outer periphery of the large-diameter cylinder portion 31 formed to the water supply piping 30 of the water supply line 3 is wound a magnet coil 5. In the inside of the large-diameter cylinder portion 31 of the piping 30 of the water supply line 3 is disposed a heating element 6, and at the end of the piping 30 is mounted a faucet 2.

The faucet 2 is provided as shown in FIG. 1 with a discharge opening 21 through which cold/hot water is discharged. A faucet portion 20 of the faucet 2 is provided with a variable resistor 7 for varying the current flowing to the magnet coil 5. The faucet 2 is further equipped with a valve (not shown) that opens and closes adjusting the flow rate of the water or hot water.

One end of the variable resistor 7 is connected via a wiring 90 to a power supply 8 as shown in FIG. 2, an the other end of the variable resistor 7 is connected via a wiring 91 to one end of the magnet coil 5, the other end of the magnet coil 5 being connected via a wiring 92 to the power supply 8.

The faucet 2 is disposed at a sink (not shown) located within a lavatory unit of an aircraft.

Next, the operation of the preferred embodiment according to the present invention will be explained.

During ordinary use of the heating faucet 1 according to the present invention, the opening of the valve of the faucet 2 allows water to travel within the water supply piping 30 of the water supply line 3 and out through the discharge opening 21 of the faucet 2 to the external sink.

Further, when alternating current flows from the power supply 8 via the variable resistor 7 to the magnet coil 5, alternating magnetic field is created at the magnet coil 5. The alternating magnetic field of coil 5 heats the heating element 6, and water passing within the large-diameter cylinder portion 31 of the water supply piping 30 of water supply line 3 is heated by the heating element 6. Thus, hot water travels inside the water supply piping 30 of the water supply line 3 and out through the discharge opening 21 of the faucet 2 to the external sink.

Moreover, the water temperature of hot water flowing inside the water supply piping 30 of the water supply line 3 utilizing the heat of the heating element 6 can be controlled by adjusting the resistance of the variable resistor 7 equipped to the faucet portion 20 of faucet 2. By varying the resistance of the variable resistor 7, the alternating current flowing from the power supply 8 via variable resistor 7 to the magnet coil 5 is changed, by which the alternating magnetic field created to the magnet coil 5 is changed, leading to change in the heating value of the heating element 6 caused by the alternating magnetic field of the magnet coil 5. Thus, the use of the variable resistor 7 enables to control the temperature of water traveling in the water supply piping 30 of the water supply line 3 and out through the discharge opening 21 of the faucet 2 to the external sink.

According to the estimated performance of the heating faucet of the present invention, the supply water temperature is 46°C (115°F), the flow-in water temperature is 16°C (60°F), and the supply water flow rate is 1.91/min (0.5 USgal/min).

Regarding measures for mounting the heating faucet to an aircraft, in order to cope with electromagnetic interference (EMI) that may affect circuits and elements of devices onboard the aircraft by the electromagnetic field generated by the magnet coil, the magnet coil is covered with a shield cover, and the relation between the magnet coil and the heating element is set to 115 V and 400 Hz as precondition.

According to the above-explained preferred embodiment, current is supplied to a magnetic coil to create an electromagnetic field to the coil and to heat a heating element by the created magnetic field, thereby heating the water flowing through the water supply line 3 by the heat of the heating member. However, it is also possible to heat the water flowing through the water supply line 3 using an electrically heated coil or a burner.

As explained, according to the heating faucet of the present invention, the heating unit heats the water flowing through the water supply line, advantageously omitting the need for a separate hot water supply line in addition to the water supply line which was required in the prior art. Since the present heating faucet does not require large space for mounting the heating unit, the limited space within the lavatory unit of the aircraft can be utilized efficiently. Further, since the present heating faucet can omit the hot water supply line that was required conventionally, the cost of the whole heating faucet system is cut down effectively, and the structure is simplified. Thus, the present heating faucet can be mounted easily to the water supply line.

Moreover, the present heating unit simply supplies power to the magnet coil from the power supply to provide current flow to the magnet coil so as to create a magnetic field to the coil, by which the heating element is heated, said heat efficiently heating the water traveling through the water supply piping of the water supply line. The present heating faucet can further be equipped with a controller provided to the faucet to control water temperature, by which the water temperature can be controlled without mixing hot water and cold water, enabling accurate control of water temperature.

Even further, since the controller is a variable resist, the resistance of the variable resist is simply changed to vary the current being supplied to the magnet coil, by which the magnetic field being generated at the magnet coil is varied, thus changing the heating value of the heating element by the magnetic field of the magnet coil.

## Claims

1. A heating faucet comprising:
a water supply line connected to a faucet to supply water thereto; and
a heating unit for heating water mounted in midstream of said water supply line.

2. A heating faucet according to claim 1, wherein said heating unit comprises:
a magnet coil wound around the outer periphery of a water supply piping of said water supply line;
a heating element mounted to the interior of said water supplypiping of the water supply line in a position corresponding to the magnet coil;
a controller equipped to a faucet portion of said faucet for controlling the water temperature; and
a power supply for supplying power to the magnet coil.

3. A heating faucet according to claim 1, wherein said heating unit comprises:
a magnet coil wound around the outer periphery of a water supply piping of said water supply line;
a heating element mounted to the interior of said water supplypiping of the water supply line in a position corresponding to the magnet coil;
a controller equipped to a faucet portion of said faucet for controlling the water temperature, said controller being a variable resistor for changing the current supplied to the magnet coil; and
a power supply for supplying power to the magnet coil.
